# EUROPEAN PATENT SPECIFICATION

(11) **EP 3 509 971 B1**
(45) Date of publication and mention of the grant of the patent: **08.07.2020**
(21) Application number: 17791472.8
(22) Date of filing: 21.08.2017
(51) Int. Cl.: B65G 47/26

(54) **SYSTEM FOR HANDLING ITEMS AND PROCESS FOR HANDLING ITEMS COMBINED WITH SEPARATORS**
SYSTEM ZUR HANDHABUNG VON ARTIKELN UND VERFAHREN ZUR HANDHABUNG VON ARTIKELN IN KOMBINATION MIT SEPARATOREN
SYSTÈME DE MANIPULATION D'ARTICLES ET PROCÉDÉ DE MANIPULATION D'ARTICLES ASSOCIÉS À DES SÉPARATEURS

(30) Priority: 09.09.2016 IT 201600090746
(43) Date of publication of application: 17.07.2019
(73) Proprietor: Brovind Vibratori S.p.A., 12074 Cortemilla (CN) (IT)
(72) Inventor: PORRO, Roberto, 12074 Cortemilla (CN) (IT)
(74) Representative: Garavelli, Paolo
(86) International application number: PCT/IT2017/000174
(87) International publication number: WO 2018/047206

(56) References cited:
- EP-A1- 1 650 143
- EP-A1- 2 743 192
- WO-A1-98/16449
- DE-B- 1 063 085
- US-B1- 6 176 369

## Description

The present invention refers to a system for handling items and to a process for handling items combined with separators.

In general, the present invention refers to: transport or storage devices, for example conveyors for loading or depositing, conveyors with pneumatic tubes, auxiliary devices for conveyors, supplying or unloading devices, devices embedded into or operatively associated with conveyor belts; vibrating, mechanical, centrifugal, gravity supplying and/or transport systems, etc.

In particular, the present invention refers to: devices or applications with hoppers and chutes equipped with means for controlling the flow of materials, for example to prevent their overloading; means for supplying a plurality of parts, in mutual relationship, through a plurality of supply sources, with or without a manual intervention; handling devices for materials associated with conveyors to be able to perform certain functions. For example: affecting the relative position or the behavior of items during their transport; chancing the spacing between individual items during their transit through a series of conveyors; supplying and loading systems which can be composed of different components, such as hoppers, lifting devices, orienting devices, rotary tables, etc.

The prior art is given by patent US8322514B2 dealing with a system for transferring items comprising a first conveyor adapted to transfer the items from an inlet and a second conveyor, arranged at a relative non-linear angle to the first conveyor, adapted to transfer the items to an outlet. Such system comprises a mechanism for transferring items from the first to the second conveyor structured and arranged to facilitate the re-organization of items conveyed by the first conveyor, so that when they are transferred to the second conveyor, they are arranged in adjacent lanes with a certain measure. Such items transferring mechanism comprises one or more elements, each one of which is moving between the first and the second position independently with respect to the other elements. Every element assembled on an independently controllable rotating arm moves at an angular speed variable between the first and the second position.

Another example of the prior art is given by patent US4991708A dealing with a line for the positive transport of packaged items, for example food products, from a withdrawal station. Such transport line allows choosing which groups of a predetermined number of items are taken to a substantially stationary condition, for a certain interval of time, to allow the operation of a removal unit, for example a handling device, a robot, etc. The transport line is actuated intermittently, under a condition in which substantially the motion becomes stationary, during the removal period, and a further movement condition in which the line advanced by a number of positions, equal to the number of items of each group. The items, supplied in a substantially but not necessarily continuous flow, are accumulated by means of a spacing conveyor, upstream of the batching conveyor which supplies the transport line. The conveyors also allow the movement intermittently and in synchronism, with the movement of the conveyor belt. The items are accumulated upstream of the batching conveyor using a further conveyor moving continuously, on which the items are transported with the chance of sliding.

The invention of patent US8322514B2 and the one of patent US4991708A substantially deal with the use of moving separators belonging to a motored device dedicated to transfer items in a controlled way, through optical sensors, to be able to change their speed.

The use of a distributed motorization till the dedicated control of mobile separators is involved implies the making of systems lacking flexibility, complicated and costly. Therefore a problem to be solved is being able to separate the items to be handled in an easy way by adopting the same supply source, for the items to be moved and for the separators.

With respect thereto, the prior art is given by patentUS4630344A dealing with an apparatus for assembling several parts consisting in a fusion with an elongated tubular opening, a check ring and a first bearing assembled and blocked in such fusion by such check ring, a spacer, a second bearing and a further check ring for blocking the parts in the fusion. The manipulator is placed in order to catch the internal diameter of the spaced to be then able to place it in the fusion.

The invention of patent US4630344A substantially deals with means for supplying separating elements coming from different supply sources, without a manual intervention. Solutions with converging supply lines can be included. Moreover, assembling means and disassembling means can be included, by interposing separating elements through the use of positioning sensors.

A further teaching is given by patent US6553653B2 dealing with a system comprising a vertical assembling table designed to automatically assemble a window body made of insulated glass composed of two identical glass slabs and of a gasket used as spacer. The glass slabs are coupled with the spacer after washing in a washing machine. The glass slabs are transported by two working lines to a transfer conveyor to be joined to the spacer.

Document WO-A1-98/16449 discloses a circular system for handling items according to the preamble of claim 1.

Object of the present invention is solving the above prior art problems by providing a system for handling items coupled with a system for moving separators, wherein the interaction between such two handling systems allows moving both the items and the separators through a single handling system.

A further object of the present invention is providing a system for handling items which allows neutralizing the function of the separators when the interaction between items and separators is not necessary.

A further object of the present invention is providing a system for handling items capable of recirculating the separators, once neutralized, to be able to use them afterwards and continuously.

A further object of the present invention is providing a system for handling items capable of using control means in order to allow an operating versatility and flexibility, according to the type of items and separators which have to be handled.

A further object of the present invention is providing a system for handling items capable of exploiting a type or a combination of different types of systems selected among vibrating, pneumatic, magnetic, electromechanical, or gravity types.

A further object of the present invention is providing a system for handling items capable of accumulating the items avoiding their mutual contact.

A further object of the present invention is providing a process for handling items combined with separators, for example implemented through a system according to the present invention.

The above and other objects and advantages of the invention, as will appear from the following description, are obtained with a system and a process for handling items as claimed in the respective independent claims. Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) can be made to what is described, without departing from the scope of the invention, as appears from the enclosed claims.

The present invention will be better described by some preferred embodiments thereof, provided as a non-limiting example, with reference to the enclosed drawings, in which:
- Figures 1 and 2 respectively show a plan view and a side view of the meaningful schematic components of a first preferred embodiment of a system for handling items according to the present invention;
- Figures 3 and 4 respectively show a plan view and a side view of the meaningful schematic components of a second preferred embodiment of a system for handling items according to the present invention;
- Figures 5 and 6 respectively show a plan view and a side view of the meaningful schematic components of a third preferred embodiment of a system for handling items according to the present invention;
- Figures 7 and 8 respectively show a plan view and a side view of the meaningful schematic components of a fourth preferred embodiment of a system for handling items according to the present invention; and
- Figures 9 and 4 respectively show a plan view and a side view of the meaningful schematic components of a fifth preferred embodiment of a system for handling items according to the present invention.

With reference to the Figures, it is possible to note that a system for handling items 1 according to the present invention comprises primary transport means 10 to move the items 1 along at least one primary path P, separating means 30 of the items 1, control means 40 to allow moving automatically and in an orderly way the items 1. The separating means 30 comprise auxiliary transport means 100 to move separators 2 along at least one auxiliary path A. The auxiliary path A complies with a geometric relationship with the primary path P to allow such separators 2 to interact with the items 1.

Advantageously, the primary transport means 10 allow moving such separators 2 along the primary path P.

In particular, the primary transport means 10 comprise at least one conveyor transporter 11 to insert and accumulate the items 1 along the primary path P, while the auxiliary transport means 100 comprise at least one auxiliary transporter 31 to flow such separators 2 from the auxiliary path A to at least one spot along the primary path P to allow the conveyor transporter 11 to push and accumulate such separators 2.

Moreover, the separating means 30 comprise at least one automatic deviating device 32 adapted to outflow such separators 2 from at least one spot along the primary path P to allow the items 1 not to interact with such separators 2.

Therefore, the automatic deviating device 32 allows moving such separators 2 along at least one restore path R1, R2, R3, R4, to allow the auxiliary transport means 100 to move such separators 2 along the auxiliary path A.

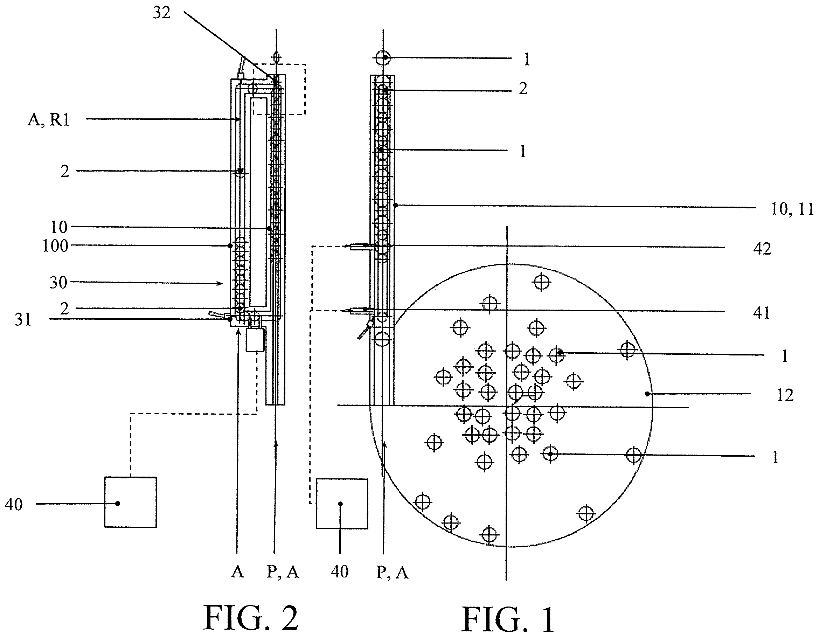

According to a first embodiment, as shown for example in Figures 1 and 2, the restore path R1 corresponds to the auxiliary path A to allow the auxiliary transporter 31 to recirculate such separators 2, along the restore path R1 and along the auxiliary path A.

With reference to the Figures, it is possible to note that the conveyor transporter 11 is connected to at least one primary supply system 12, 12-22, of the items 1.

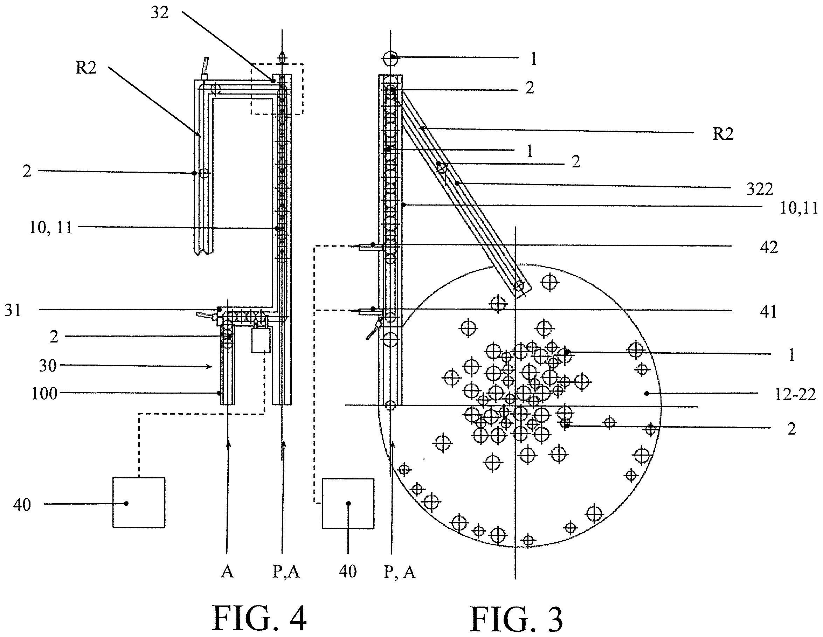

With reference to Figures 3 to 10, it is possible to note that the auxiliary transporter 31 is connected to at least one auxiliary supply system 22 of such separators 2.

In particular, the conveyor transporter 11 and the auxiliary transporter 31 are connected to the mixed supply system 12-22 of the items 1 and of such separators 2.

According to a second embodiment, as shown for example in Figures 3 and 4, the system according to the present invention comprises at least one conveyor 322 which allows making the restore path R2 towards the mixed supply system 12-22, to allow the recirculation of such separators 2 along the auxiliary path A.

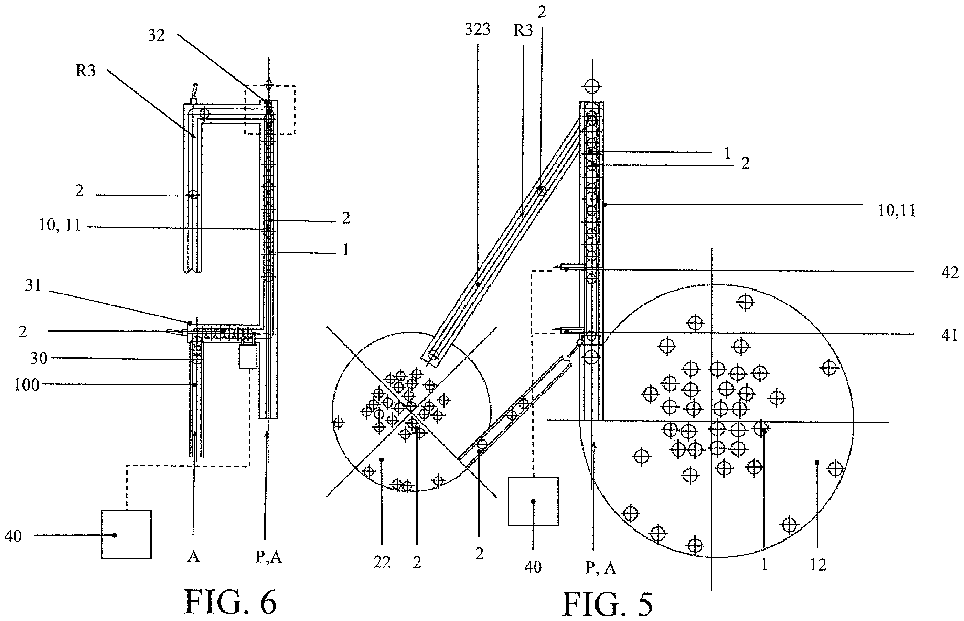

According to a third embodiment, as shown for example in Figures 5 and 6, the system according to the present invention comprises at least one conveyor 323 which allows making the restore path R3, towards the auxiliary supply system 22, to allow the recirculation of such separators 2 along the auxiliary path A.

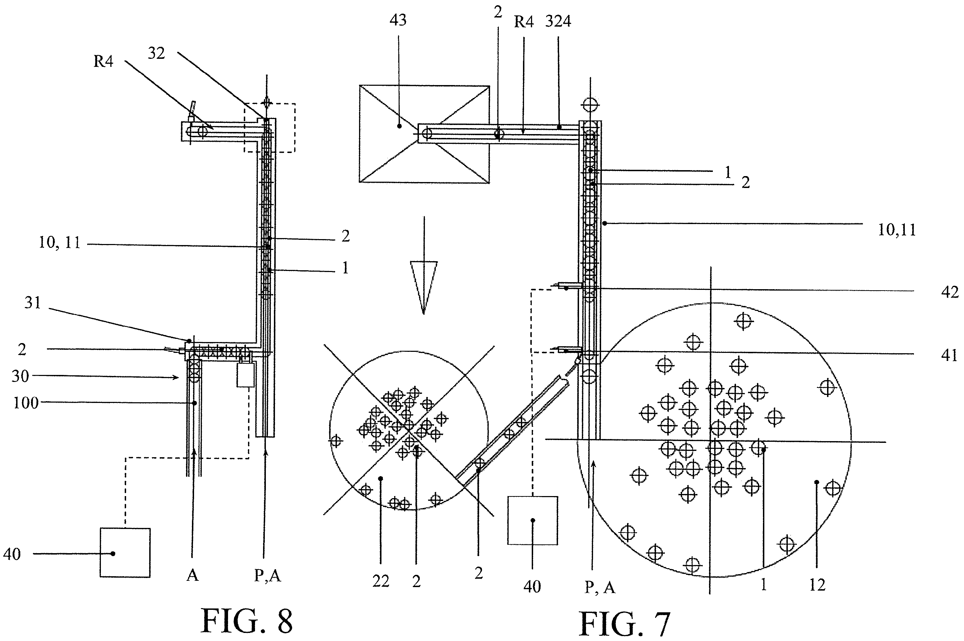

According to a fourth embodiment, as shown for example in Figures 7 and 8, the system according to the present invention comprises at least one conveyor 324 which allows making the restore path R4 towards a collecting system 43 of such separators 2, to allow operating the auxiliary supply system 22.

Preferably, the collecting system 43 is composed of at least one container adapted to receive and accumulate a certain amount of such separators 2, to allow their transport towards the auxiliary supply system 22. In particular, the auxiliary supply system 22 comprises at least one container of such separators 2.

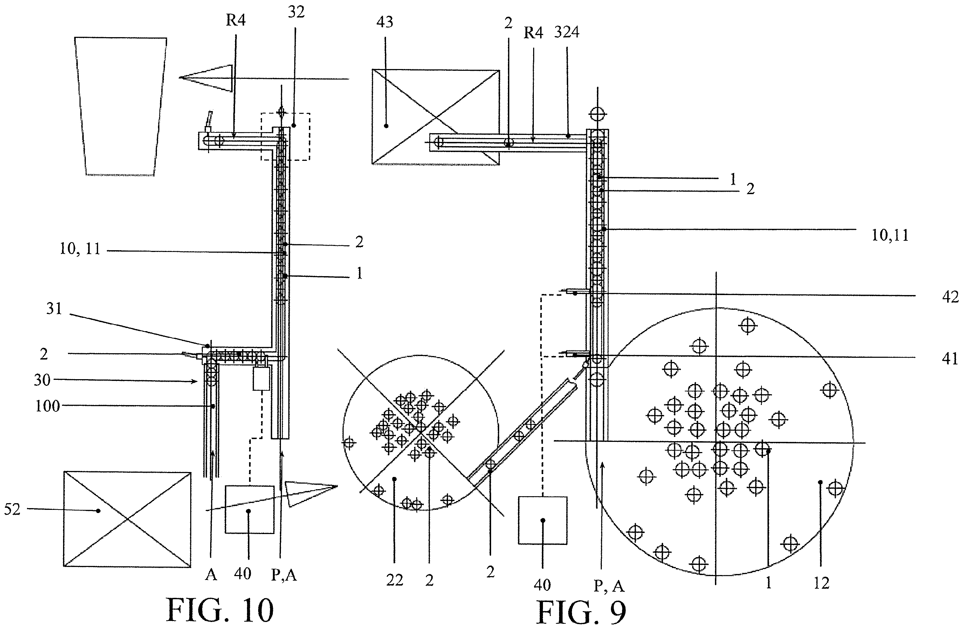

According to a fifth embodiment, as shown for example in Figures 9 and 10, the collecting system 43 is composed of at least one container adapted to receive and accumulate a certain amount of such separators 2 to be evacuated to allow their replacement, through the separators 2 present in a storage container 52.

With reference to the Figures, it is possible to note that the control means 40 comprise at least one controller adapted to allow such separators 2 to interact with the items 1, depending on a presence or transit signal of the items 1 detected by means of at least one first sensor 41 next to the primary path P and depending on an accumulation signal of the items 1 and of such separators 2 detected by means of at least one second sensor 42 next to the primary path P.

In particular, the control means 40 allow that such separators 2 are inserted along the primary path P in order to accumulate the items 1 alternated with respective separators 2, with a mutual thrust.

The primary 10 and auxiliary 100 transport means 10, as well as the primary 12 and auxiliary 22 supply systems, belong to a type or a combination of different types selected among the vibrating, pneumatic, magnetic, electromechanical, or gravity types.

The conveyor 322, 323, 324, along the restore path R2, R3, R4 belongs to a type or a combination of different types of transport selected among the vibrating, pneumatic, magnetic, electromechanical, or gravity types.

The present invention further deals with a process for handling items 1 combined with separators 2, for example through a system for handling items 1 as previously described, such process comprising the steps of:
- activating the auxiliary transport means 100 to allow pushing and accumulating such separators 2 along the auxiliary path A;
- activating the primary transport means 10 allow pushing and accumulating such items 1 and such separators 2, along the primary path P;
- activating the control means 40 to allow arranging automatically and in a sequence each one of such items 1 with respect to at least one of such separators 2, along the primary path P;
- activating the automatic deviating device 32 to outflow such separators 2 from at least one spot along the primary path P.

In particular, the process according to the present invention can further comprise the steps of:
- allowing the movement of such separators 2 along at least one restore path R1, R2, R3, R4 to allow supplying the auxiliary transport means 100;
- allowing the movement of such items 1 from the at least one primary supply system 12, 12-22 to allow supplying the at least one conveyor transporter (11).

The system and/or the process for handling items according to the present invention allow obtaining the stated objects.

The system and/or the process for handling items according to the present invention allow supplying and accumulating the items by accumulating items alternated with respective separators, pushed one over the other.

In particular, the system allows operating with a controlled interposition of the items and of the separators.

Moreover, the system and/or the process for handling items according to the present invention allow accumulate with push particular or delicate items, interposing a suitable separator or spacer, capable of avoiding the contact among the items.

The separator also avoids damaging the items when pushed.

The system according to the present invention allows accumulating items which can be accumulated with difficulty through conventional accumulators due to shape, magnetism, etc.

The system and/or the process for handling items according to the present invention allow accumulating delicate items by protecting the ir surface from the risk of damages, keeping it intact and not affected by impacts.

The system according to the present invention can be used on many ways, normally mutually parallel, allowing to create a thrusting entity for the row of items and the advancement of rows of items in parallel.

The system and/or the process for handling items according to the present invention allow positioning at least one separator between two items. In a second step, such separator is removed from the transport line, allowing the individual item to move without the separator.

In the system and/or the process for handling items according to the present invention, it is possible to arrange and make several types of recirculation and recovery of the separators, thereby making a sort of continuous cycle.

Among the several objects reached, the one of avoiding overlapping and engagements among items must be pointed out, preventing damages of the items caused by contacts and impacts.

Through the system and/or the process for handling items according to the present invention, an adequate thrust level is guaranteed to be able to move the items and, at the same time, not to damage the items during their contacts.

Moreover, through the system and/or the process for handling items according to the present invention, magnetic phenomena among the items in contact are avoided.

The system and/or the process for handling items according to the present invention find a preferred application in the interlocking systems to an automatic assembling or packaging machine, allowing the coupled handling of: items and separators with various and suitable sizes, shapes and materials, depending on the application and the type of part to be supplied or accumulated.

## Claims

1. System for handling items (1), comprising primary transport means (10) to move said items (1) along at least one primary path (P), separating means (30) of said items (1) comprising separators, control means (40) to allow moving automatically and in an orderly way said items (1), said separating means (30) comprising auxiliary transport means (100) to move separators (2) along at least one auxiliary path (A), said auxiliary path (A) being in geometric relationship with said primary path (P) to allow said separators (2) to interact with said items (1), said primary transport means (10) allowing to move said separators (2) along said primary path (P),
**characterized in that** said primary transport means (10) comprise at least one conveyor transporter (11) to insert and accumulate said items (1) along said primary path (P) and said auxiliary transport means (100) comprise at least one auxiliary transporter (31) to flow said separators (2) from said auxiliary path (A) to at least one spot along said primary path (P) to allow said at least one conveyor transporter (11) to push and accumulate said separators (2),
**in that** said control means (40) comprise at least one controller adapted to allow said separators (2) to interact with said items (1), depending on a presence or transit signal of said items (1) detected by means of at least one first sensor (41) next to said primary path (P), and depending on an accumulation signal of said items (1) and of said separators (2) detected by means of at least one second sensor (42) next to said primary path (P), and
**in that** said separators (2) are inserted along said primary path (P) in order to accumulate said items (1) alternated with respective separators (2), said items (1) and said separators (2) being mutually pushing.

2. System according to the previous claim, **characterized in that** said separating means (30) comprise at least one automatic deviating device (32) adapted to outflow said separators (2) from at least one spot along said primary path (P) to allow said items (1) not to interact with said separators (2) .

3. System according to the previous claim, **characterized in that** said at least one automatic deviating device (32) allows moving said separators (2) along at least one restore path (R1, R2, R3, R4) to allow said auxiliary transport means (100) to move said separators (2) along said auxiliary path (A).

4. System according to the previous claim, **characterized in that** said restore path (R1) corresponds to said auxiliary path (A) to allow said at least one auxiliary transporter (31) to recirculate said separators (2) along said restore path (R1) and along said auxiliary path (TO).

5. System according to any one of the previous claims, **characterized in that** said at least one conveyor transporter (11) is connected to at least one primary supply system (12, 12-22) of said items (1) .

6. System according to any one of claims 1 to 3, **characterized in that** said at least one auxiliary transporter (31) is connected to at least one auxiliary supply system (22) of said separators (2) .

7. System according to the previous claim, **characterized in that** said at least one conveyor transporter (11) and said at least one auxiliary transporter (31) are connected to a mixed supply system (12-22) of said items (1) and of said separators (2).

8. System according to the previous claim, **characterized in that** it comprises at least one conveyor (322), along said restore path (R2) towards said mixed supply system (12-22), to allow the recirculation of said separators (2) along said auxiliary path (A).

9. System according to claim 6, **characterized in that** it comprises at least one conveyor (323), along said restore path (R3) towards said auxiliary supply system (22), to allow the recirculation of said separators (2) along said auxiliary path (A).

10. System according to claim 6, **characterized in that** it comprises at least one conveyor (324), along said restore path (R4) towards a collecting system (43) of said separators (2) to allow operating said auxiliary supply system (22).

11. System according to the previous claim, **characterized in that** said collecting system (43) is composed of at least one container adapted to receive and accumulate a certain amount of said separators (2) to allow the transport of said separators (2) towards said auxiliary supply system (22), said auxiliary supply system (22) comprising at least one container of said separators (2).

12. System according to claim 10, **characterized in that** said collecting system (43) is composed of at least one container adapted to receive and accumulate a certain amount of said separators (2) to be evacuated to allow replacing said separators (2) through a storage container (52).

13. System according to claim 6, **characterized in that** said primary (10) and auxiliary (100) transport means, as well as said primary (12) and auxiliary (22) supply systems belong to a type or a combination of different types selected among vibrating, pneumatic, magnetic, electromechanical, or gravity types.

14. System according to claim 3, **characterized in that** said at least one conveyor (322, 323, 324) along said restore path (R2, R3, R4) belongs to a type or a combination of different types selected among vibrating, pneumatic, magnetic, electromechanical, or gravity types.

15. Process for handling items (1) combined with separators (2), through a system for handling items (1) according to any one of claims 2 to 14, **characterized in that** it comprises the steps of:
activating said auxiliary transport means (100) to allow pushing and accumulating said separators (2) along said auxiliary path (A);
activating said primary transport means (10) to allow pushing and accumulating said items (1) and said separators (2) along said primary path (P); activating said control means (40) to allow arranging automatically and in a sequence each one of said items (1) with respect to at least one of said separators (2) along said primary path (P); activating said automatic deviating device (32) to outflow said separators (2) from at least one spot along said primary path (P).

16. Process according to the previous claim, **characterized in that** it comprises the steps of:
allowing a movement of said separators (2) along at least one restore path (R1, R2, R3, R4) to allow supplying said auxiliary transport means (100) ;
allowing a movement of said items (1) from said at least one primary supply system (12, 12-22) to allow supplying said at least one conveyor transporter (11).

## Patentansprüche

1. Handhabungssystem für Artikel (1), das primäre Transportmittel (10) enthält, um die genannten Artikel (1) längs mindestens eines primären Weges (P) zu verschieben, Trennvorrichtungen (30) der genannten Artikel (1), die Separatoren enthalten, Kontrollvorrichtungen (40), um es zu ermöglichen, die genannten Artikel (1) automatisch und geordnet zu verschieben, die genannten Trennvorrichtungen (30) enthalten zusätzliche Transportmittel (100), um Separatoren (2) längs mindestens eines zusätzlichen Weges (A) zu verschieben, der genannte zusätzliche Weg (A) liegt in geometrischem Verhältnis zum genannten primären Weg (P), um es den genannten Separatoren (2) zu ermöglichen, mit den genannten Artikeln (1) zu interagieren, die genannten primären Transportmittel (10) ermöglichen es, die genannten Separatoren (2) längs des genannten primären Weges (P) zu verschieben,
das **dadurch gekennzeichnet ist, dass** die genannten primären Transportmittel (10) mindestens ein Förderband (11) enthalten, um die genannten Artikel (1) längs des genannten primären Weges (P) einzuführen und zu sammeln, und dass die genannten zusätzlichen Transportmittel (100) mindestens ein zusätzliches Förderband (31) enthalten, um die genannten Separatoren (2) vom genannten zusätzlichen Weg (A) an mindestens einem Punkt längs des genannten zusätzlichen Weges (P) zusammenlaufen zu lassen, um es dem genannten mindestens einem Förderband (11) zu ermöglichen, die genannten Separatoren (2) zu schieben und zu sammeln,
dadurch, dass die genannten Kontrollvorrichtungen (40) mindestens eine Kontrollvorrichtung enthalten, die dazu dient, es den genannten Separatoren (2) zu ermöglichen, mit den genannten Artikeln (1) im Verhältnis zu einem Präsenz- oder Durchgangssignal der genannten Artikel (1) zu interagieren, das durch mindestens einen ersten Sensor (41) in der Nähe des genannten primären Weges (P) erkannt wird, und im Verhältnis zu einem Sammelsignal der genannten Artikel (1) und der genannten Separatoren (2), das durch mindestens einen zweiten Sensor (42) in der Nähe des genannten primären Weges (P) erkannt wird, und
dadurch, dass die genannten Separatoren (2) längs des genannten primären Weges (P) eingeführt werden, um die genannten Artikel (1) abwechselnd mit den entsprechenden Separatoren (2) zu sammeln, die genannten Artikel (1) und die genannten Separatoren (2) schieben sich gegenseitig.

2. System gemäß dem vorhergehenden Patentanspruch, das **dadurch gekennzeichnet ist, dass** die genannten Trennvorrichtungen (30) mindestens eine automatische Umlenkvorrichtung (32) haben, die dazu dient, die genannten Separatoren (2) von mindestens einem Punkt längs des genannten primären Weges (P) austreten zu lassen, um es den genannten Artikeln (1) zu ermöglichen, nicht mit den genannten Separatoren (2) zu interagieren.

3. System gemäß dem vorhergehenden Patentanspruch, das **dadurch gekennzeichnet ist, dass** es die genannte mindestens eine automatische Umlenkvorrichtung (32) ermöglicht, die genannten Separatoren (2) längs mindestens eines Rückstellweges (R1, R2, R3, R4) zu verschieben, um es den genannten zusätzlichen Transportmitteln (100) zu ermöglichen, die genannten Separatoren (2) längs des genannten zusätzlichen Weges (A) zu verschieben.

4. System gemäß dem vorhergehenden Patentanspruch, das **dadurch gekennzeichnet ist, dass** der genannte Rückstellweg (R1) dem genannten zusätzlichen Weg (A) entspricht, um es dem genannten mindestens einem zusätzlichen Förderband (31) zu ermöglichen, die genannten Separatoren (2) wieder längs des genannten Rückstellweges (R1) und längs des genannten zusätzlichen Weges (A) in Umlauf zu bringen.

5. System gemäß einem beliebigen der vorhergehenden Patentansprüche, das **dadurch gekennzeichnet ist, dass** das genannte mindestens eine Förderband (11) mit mindestens einem primären Zuführsystem (12, 12-22) der genannten Artikel (1) verbunden ist.

6. System gemäß einem beliebigen der Patentansprüche von 1 bis 3, das **dadurch gekennzeichnet ist, dass** das genannte mindestens eine zusätzliche Förderband (31) mit mindestens einem zusätzlichen Zuführsystem (22) der genannten Separatoren (2) verbunden ist.

7. System gemäß dem vorhergehenden Patentanspruch, das **dadurch gekennzeichnet ist, dass** das genannte mindestens eine Förderband (11) und das genannte mindestens eine zusätzliche Transportmittel (31) mit einem gemischten Zuführsystem (12-22) der genannten Artikel (1) und der genannten Separatoren (2) verbunden sind.

8. System gemäß dem vorhergehenden Patentanspruch, das **dadurch gekennzeichnet ist, dass** es mindestens ein Förderband (322) längs des genannten Rückstellweges (R2) in Richtung des genannten gemischten Zuführsystems (12-22) enthält, um den Kreislauf der genannten Separatoren (2) längs des genannten zusätzlichen Weges (A) zu ermöglichen.

9. System gemäß Patentanspruch 6, das **dadurch gekennzeichnet ist, dass** es mindestens ein Förderband (323) längs des genannten Rückstellweges (R3) in Richtung des genannten zusätzlichen Zuführsystems (22) enthält, um den Kreislauf der genannten Separatoren (2) längs des genannten zusätzlichen Weges (A) zu ermöglichen.

10. System gemäß Patentanspruch 6, das **dadurch gekennzeichnet ist, dass** es mindestens ein Förderband (324) längs des genannten Rückstellweges (R4) in Richtung eines Sammelsystems (43) der genannten Separatoren (2) enthält, um den Betrieb des genannten zusätzlichen Zuführsystems (22) zu ermöglichen.

11. System gemäß dem vorhergehenden Patentanspruch, das **dadurch gekennzeichnet ist, dass** das genannte Sammelsystem (43) aus mindestens einem Behälter besteht, der dazu dient, eine bestimmte Menge der genannten Separatoren (2) aufzunehmen und zu sammeln, um den Umschlag der genannten Separatoren (2) in Richtung des genannten zusätzlichen Zuführsystems (22) zu ermöglichen, das genannte zusätzliche Zuführsystem (22) enthält mindestens einen Behälter der genannten Separatoren (2).

12. System gemäß Patentanspruch 10, das **dadurch gekennzeichnet ist, dass** das genannte Sammelsystem (43) aus mindestens einem Behälter besteht, der dazu dient, eine bestimmte Menge der genannten Separatoren (2) aufzunehmen und zu sammeln, die abtransportiert werden müssen, um den Ersatz der genannten Separatoren (2) durch einen Lagerbehälter (52) zu ermöglichen.

13. System gemäß Patentanspruch 5 oder 6, das **dadurch gekennzeichnet ist, dass** die genannten primären (10) und zusätzlichen Transportmittel (100) sowie die genannten primären (12) und zusätzlichen Zuführsysteme (22) einem Typ oder einer Kombination von verschiedenen ausgewählten Typologien angehören, darunter Schüttel-, Pneumatik-, Magnet-, elektromagnetisches, und Schwerkraftsystem.

14. System gemäß Patentanspruch 3, das **dadurch gekennzeichnet ist, dass** das genannte mindestens eine Förderband (322, 323, 324) längs des genannten Rückstellweges (R2, R3, R4) einem Typ oder einer Kombination von verschiedenen ausgewählten Transporttypologien angehört, darunter Schüttel-, Pneumatik-, Magnet-, elektromagnetischer, und Schwerkrafttransport.

15. Handhabungsverfahren von Artikeln (1), kombiniert mit Separatoren (2) durch ein Handhabungssystem von Artikeln (1) gemäß einem beliebigen der vorhergehenden Patentansprüche von 2 bis 14, das **dadurch gekennzeichnet ist, dass** es folgende Phasen enthält:
• Aktivierung der genannten zusätzlichen Transportmittel (100), um es zu ermöglichen, die genannten Separatoren (2) längs des genannten zusätzlichen Weges (A) zu schieben und zu sammeln;
• Aktivierung der genannten primären Transportmittel (10), um es zu ermöglichen, die genannten Artikel (1) und die genannten Separatoren (2) längs des genannten primären Weges (A) zu schieben und zu sammeln;
• Aktivierung der genannten Kontrollvorrichtungen (40), um es zu ermöglichen, jeden der genannten Artikel (1) im Verhältnis zu mindestens einem der genannten Separatoren (2) längs des genannten primären Weges (P) automatisch und nacheinander anzuordnen;
• Aktivierung der genannten automatischen Umlenkvorrichtung (32), um die genannten Separatoren (2) aus mindestens einem Punkt längs des genannten primären Weges (P) austreten zu lassen.

16. Verfahren gemäß dem vorhergehenden Patentanspruch, das **dadurch gekennzeichnet ist, dass** es folgende Phasen einschließt:
• Die Verschiebung der genannten Separatoren (2) längs mindestens eines Rückstellweges (R1, R2, R3, R4) zu ermöglichen, um es zu ermöglichen, die genannten zusätzlichen Transportvorrichtungen (100) zu beschicken;
• Die Verschiebung der genannten Artikel (1) von mindestens einem primären Zuführsystem (12, 12-22) zu ermöglichen, um es zu ermöglichen, mindestens ein Förderband (11) zu beschicken.

## Revendications

1. Système de manutention d'articles (1), comprenant des moyens de transport primaire (10) pour déplacer les articles (1) le long, au moins, d'un parcours primaire (P), des moyens de séparation (30) des articles (1) comprenant des séparateurs, des moyens de contrôle (40) pour pouvoir déplacer les articles (1) automatiquement et dans l'ordre ; les moyens de séparation (30) comprennent des moyens de transport auxiliaire (100) pour déplacer des séparateurs (2) le long, au moins, d'un parcours auxiliaire (A) qui est en relation géométrique avec le parcours primaire (P) afin que les séparateurs (2) puissent interagir avec les articles (1) ; les moyens de transport primaire (10) permettent de déplacer les séparateurs (2) le long du parcours primaire (P),
**caractérisé en ce que** les moyens de transport primaire (10) comprennent au moins un convoyeur (11) pour enfiler et accumuler les articles (1) le long du parcours primaire (P) et des moyens de transport auxiliaire (100) comprenant au moins un convoyeur auxiliaire (31) pour faire converger les séparateurs (2) depuis le parcours auxiliaire (A) vers au moins un point situé le long du parcours primaire (P) pour permettre au moins à un convoyeur (11) de pousser et d'accumuler les séparateurs (2),
**en ce que** les moyens de contrôle (40) comprennent au moins un contrôleur apte à permettre aux séparateurs (2) d'interagir avec les articles (1), en fonction d'un signal de présence ou de passage des articles (1) relevé au moins par un premier capteur (41) à proximité du parcours primaire (P) et en fonction d'un signal d'accumulation des articles (1) et des séparateurs (2) relevé au moins par un deuxième capteur (42) à proximité du parcours primaire (P), et
**en ce que** les séparateurs (2) sont introduits le long du parcours primaire (P) en sorte d'accumuler les articles (1) en les alternant à des séparateurs relatifs (2) ; les articles (1) et les séparateurs (2) se poussent réciproquement.

2. Système selon la revendication précédente, **caractérisé en ce que** les moyens de séparation (30) comprennent au moins un dispositif automatique de déviation (32) apte à évacuer les séparateurs (2) à partir d'un point le long du parcours primaire (P) pour permettre aux articles (1) de ne pas interagir avec les séparateurs (2).

3. Système selon la revendication précédente, **caractérisé en ce qu'**un dispositif automatique de déviation (32) au moins permet de faire déplacer les séparateurs (2) le long au moins d'un parcours de rétablissement (R1, R2, R3, R4) pour permettre aux moyens de transport auxiliaire (100) de déplacer les séparateurs (2) le long du parcours auxiliaire (A).

4. Système selon la revendication précédente, **caractérisé en ce que** le parcours de rétablissement (R1) correspond au parcours auxiliaire (A) pour permettre au moins au convoyeur auxiliaire (31) de remettre en circulation les séparateurs (2) le long du parcours de rétablissement (R1) et le long du parcours auxiliaire (A).

5. Système selon l'une des revendications précédentes, **caractérisé en ce qu'**au moins un convoyeur (11) est relié au moins à un système d'alimentation primaire (12, 12-22) des articles (1).

6. Système selon l'une des revendications de 1 à 3, **caractérisé en ce qu'**au moins un convoyeur auxiliaire (31) est relié au moins à un système d'alimentation auxiliaire (12, 1222) des séparateurs (2).

7. Système selon la revendication précédente, **caractérisé en ce qu'**au moins un convoyeur (11) et un convoyeur auxiliaire (31) sont reliés à un système d'alimentation mixte (12-22) des articles (1) et des séparateurs (2).

8. Système selon la revendication précédente, **caractérisé en ce qu'**il comprend au moins un convoyeur (322), le long du parcours de rétablissement (R2) vers le système d'alimentation mixte (12-22), pour permettre la remise en circulation des séparateurs (2) le long du parcours auxiliaire (A).

9. Système selon la revendication 6, **caractérisé en ce qu'**il comprend au moins un convoyeur (323), le long du parcours de rétablissement (R3) vers le système d'alimentation auxiliaire (22), pour permettre la remise en circulation des séparateurs (2) le long du parcours auxiliaire (A).

10. Système selon la revendication 6, **caractérisé en ce qu'**il comprend au moins un convoyeur (324), le long du parcours de rétablissement (R4) vers un système de collecte (43) des séparateurs (2) pour faire fonctionner le système d'alimentation auxiliaire (22).

11. Système selon la revendication précédente, **caractérisé en ce que** le système de collecte (43) est constitué au moins d'un conteneur apte à recevoir et accumuler une certaine quantité de séparateurs (2) pour permettre le transfert des séparateurs (2) vers le système d'alimentation auxiliaire (22) ; le système d'alimentation auxiliaire (22) comprend au moins un conteneur de séparateurs (2).

12. Système selon la revendication 10, **caractérisé en ce que** le système de collecte (43) est constitué au moins d'un conteneur apte à recevoir et accumuler une certaine quantité de séparateurs (2) à faire évacuer pour pouvoir remplacer ces séparateurs (2) à l'aide d'un conteneur de stockage (52).

13. Système selon la revendication 5 ou 6, **caractérisé en ce que** les moyens de transport primaire (10) et auxiliaire (100), de même que les systèmes d'alimentation primaire (12) et auxiliaire (22) appartiennent à un type ou une combinaison de typologies différentes sélectionnées entre vibrant, pneumatique, magnétique, électromécanique ou à gravité.

14. Système selon la revendication 3, **caractérisé en ce qu'**au moins un convoyeur (322, 323, 324) le long du parcours de rétablissement (R2, R3, R4) appartient à un type ou une combinaison de typologies différentes de transport sélectionnées entre vibrant, pneumatique, magnétique, électromécanique ou à gravité.

15. Procédure de manutention d'articles (1) associés à des séparateurs (2), à travers un système de manutention d'articles (1) selon l'une des revendications de 2 à 14 précédentes, **caractérisé en ce qu'**elle comprend les phases suivantes :
• activer les moyens de transport auxiliaire (100) pour pouvoir pousser et accumuler les séparateurs (2) le long du parcours auxiliaire (A) ;
• activer les moyens de transport primaire (10) pour pouvoir pousser et accumuler les articles (2) et les séparateurs (2) le long du parcours primaire (P);
• activer les moyens de contrôle (40) pour pouvoir placer automatiquement et dans l'ordre chaque article (1) par rapport, au moins, à l'un des séparateurs (2) le long du parcours primaire (P) ;
• activer le dispositif automatique de déviation (32) pour faire glisser les séparateurs (2) à partir au moins d'un point le long du parcours primaire (P).

16. Procédure selon la revendication précédente, **caractérisée en ce qu'**elle comprend les phases suivantes :
• permettre le déplacement des séparateurs (2) le long au moins d'un parcours de rétablissement (R1, R2, R3, R4) pour pouvoir alimenter les moyens de transport auxiliaire (100) ;
• permettre le déplacement des articles (1) à partir au moins d'un système d'alimentation primaire (12, 12-22) pour pouvoir alimenter au moins un convoyeur (11).
